# EUROPÄISCHE PATENTSCHRIFT

(11) **EP 2 244 528 B1**
(45) Veröffentlichungstag und Bekanntmachung des Hinweises auf die Patenterteilung: **03.06.2015**
(21) Anmeldenummer: 10160147.4
(22) Anmeldetag: 16.04.2010
(51) Int. Cl.: H04W 92/08, H04M 1/24

(54) **Mobilfunkvorrichtung mit mehreren SIM-Karten**
Wireless device with multiple SIM cards
Dispositif radio mobile doté de plusieurs cartes SIM

(30) Priorität: 22.04.2009 DE 102009018195
(43) Veröffentlichungstag der Anmeldung: 27.10.2010
(73) Patentinhaber: Vodafone Holding GmbH, 40213 Düsseldorf (DE)
(72) Erfinder: Joppek, Franz-Josef, 47495, Rheinberg (DE); Franke, Jörg, 40489, Düsseldorf (DE); Stepping Dr., Christoph, 57462, Olpe (DE)
(74) Vertreter: Jostarndt, Hans-Dieter

(56) Entgegenhaltungen:
- WO-A1-01/80437
- DE-A1- 10 034 296
- DE-C1- 19 620 164
- DE-U1- 20 013 259

## Beschreibung

### Technisches Gebiet

Die Erfindung betrifft eine Mobilfunkvorrichtung Mobilfunkvorrichtung, umfassend eine Mobilstation, die unter Verwendung einer SIM-Karte mit einem Mobilfunknetzwerk verbindbar ist. Darüber hinaus bezieht sich die Erfindung auf ein die Mobilfunkvorrichtung enthaltendes System zum Überprüfen der Dienstqualität in wenigstens einem Mobilfunknetzwerk.

### Hintergrund der Erfindung

Mobilfunkendgeräte, wie beispielsweise Mobiltelefone, werden üblicherweise zusammen mit SIM-Karten betrieben, die austauschbar in die Mobilfunkendgeräte eingesetzt sind. Die SIM-Karten enthalten insbesondere die Identität des Nutzers und dienen dazu, den Nutzer in einem Mobilfunknetzwerk zu identifizieren und seine Berechtigung zur Nutzung von Diensten des Mobilfunknetzwerks zu überprüfen. Eine SIM-Karte wird in der Regel von dem Betreiber des Heimatnetzwerks eines Nutzers ausgegeben, mit dem der Nutzer einen Mobilfunkvertrag geschlossen hat. Innerhalb des Heimatnetzwerks wird der Nutzer auch in einem Register (HLR - Home Location Register) geführt. Beim so genannten Roaming bei dem sich der Nutzer in einem besuchten Mobilfunknetzwerk anmeldet, d.h. in einem anderen Mobilfunknetzwerk als dem Heimnetzwerk, wird ebenfalls auf das Register des Heimatnetzwerks zugegriffen, um die Identität und die Berechtigung des Nutzers zu überprüfen.

In Mobilfunksystemen ist es üblich, regelmäßig Überprüfungen der Dienstqualität durchzuführen. Von Interesse ist dabei insbesondere die Dienstqualität bei der Nutzung von Diensten des Heimatnetzwerks. Hierbei werden häufig die Dienstqualitäten in verschiedenen Mobilfunknetzwerken miteinander verglichen. Für derartige Vergleichstests ist die Verwendung mehrerer SIM-Karten erforderlich, die von den Betreibern der zu vergleichenden Mobilfunknetzwerke ausgegeben worden sind. Des Weiteren ist oftmals die Dienstqualität von Interesse, die in einem bestimmten Mobilfunknetzwerk bei Roaming-Verbindungen bereitgestellt wird, also dann, wenn dieses Mobilfunknetzwerk als besuchtes Mobilfunknetzwerk genutzt wird. Um hierbei die Dienstqualität für Nutzer unterschiedlicher Heimatnetzwerke zu überprüfen, ist es erforderlich, bei der Anmeldung die SIM-Karten zu verwenden, die von den Betreibern dieser Heimatnetzwerke ausgegeben worden sind.

Aus der EP 1 094 678 A1 ist ein Verfahren zum Messen der Qualität von Roaming-Verbindungen und eine Anordnung zur Durchführung des Verfahrens bekannt. Bei dem bekannten Verfahren werden mithilfe von wenigstens zwei Teststationen Testanrufe über das Mobilfunknetz erzeugt und/oder Anrufe von dem Mobilfunknetz empfangen. Die zur Durchführung der Testanrufe benötigten Daten von SIM-Karten werden von einer SIM-Karten-Servervorrichtung an die Teststationen übertragen. Die Servervorrichtung ist dazu geeignet, eine Vielzahl von SIM-Karten aufzunehmen. Die Infrastruktur, die zur Durchführung des bekannten Verfahrens notwendig ist, ist relativ aufwendig.

Aus DE 196 20 164 C1 ist eine Testeinreichtung zur Überprüfung der Leitweglenkung und Gebührenerfassung in einem Mobilfunknetz mit einer Multiplexereinrichtung bekannt. Die Multiplexeinrichtung ist zur Aufnahme und wechselweisen Bedienung einer Mehrzahl von Datenmodulen (SIM-Karte) ausgestattet, wobei die Multiplexeinrichtung über eine Mobilteilnehmerschnittstelle mit der Kommunikationsschnittstelle des Mobilteilnehmers verbunden ist.

Aus WO 01/80437 A1 ist eine Zusatzkomponente für Mobiltelefone bekannt, die zwei SIM-Karten aufnehmen kann und mit dem Mobiltelefon über einen Adapter eingesetzt in die ursprünglichen SIM-Kartenaufnahme verbunden ist. Die Zusatzkomponenten besitzt einen von außen bedienbaren Schalter, mit dem von der einen SIM-Karten in der Zusatzkomponenten auf die andere SIM-Karte umgeschaltet werden kann.

Aus DE 200 13 259 U1 ist eine Umschalteinheit für SIM-Karten eines Mobiltelefons bekannt, die über eine Verbindungsleitung mit dem SIM-Kartensockel des Mobiltelefons verbunden ist. Die Umschalteinheit kann zwei SIM-Karten aufnehmen die über einen Schalter wahlweise mit dem Mobiltelefon verbunden sind. Die Umschalteinheit ist so dimensioniert, dass sie in das Mobiltelefon eingesetzt werden kann.

Aus DE 100 34 296 A1 ist ein digitales Mobiltelefon unter Benutzung eines Teilnehmeridentifikationsmoduls bekannt. Das Mobiltelefon weist einen externen Halter für mindestens zwei dieser Teilnehmeridentifikationsmodule auf, die mittels eines Schalters zur Benutzung mit demselben Telefon ausgewählt werden können

### Darstellung der Erfindung

Es ist daher eine Aufgabe der vorliegenden Erfindung, eine Vorrichtung zu schaffen, die eine einfachere Nutzung mehrerer SIM-Karten ermöglicht, ohne die SIM-Karten zu beschädigen. Insbesondere sollen mit der Vorrichtung die zuvor beschriebenen Überprüfungen der Dienstqualität in einem oder mehreren Mobilfunknetzwerken vereinfacht werden.

Die Aufgabe wird durch eine Mobilfunkvorrichtung mit den Merkmalen des Patentanspruchs 1 gelöst. Ausführungsformen der Vorrichtung sind in den abhängigen Ansprüchen angegeben.

Gemäß einem Aspekt der Erfindung wird eine Vorrichtung vorgeschlagen, die eine Mobilstation umfasst, welche unter Verwendung einer SIM-Karte mit einem Mobilfunknetzwerk verbindbar ist. Zudem umfasst die Vorrichtung einen mit der Mobilstation verbindbaren Multiplexer zur Aufnahme mehrerer SIM-Karten, wobei der Multiplexer über erste Schaltmittel verfügt, über die jeweils eine SIM-Karte mit der Mobilstation verbindbar ist. Die Mobilfunkvorrichtung umfasst weiterhin ein zweites Schaltmittel, das dazu ausgestaltet ist, die Mobilstation abzuschalten, während eine SIM-Karte von der Mobilstation getrennt und eine andere SIM-Karte mit der Mobilstation verbunden wird.

Ein Vorteil der erfindungsgemäßen Vorrichtung besteht darin, dass mehrere SIM-Karten von einer einzigen Mobilstation verwendet werden können. Dies wird durch einen Multiplexer ermöglicht, der es gestattet, von einer verwendeten SIM-Karte zu einer anderen verwendeten SIM-Karte zu wechseln. Es wird damit eine besonders einfache Vorrichtung zur Nutzung mehrerer SIM-Karten geschaffen.

Während eines Wechsels der SIM-Karte wird die Mobilstation der erfindungsgemäßen Vorrichtung vorzugsweise abgeschaltet. Insbesondere wird die Mobilstation abgeschaltet, bevor eine SIM-Karte von der Mobilstation getrennt wird. Hierdurch wird eine Abschaltroutine ausgeführt, die zum sicheren Abschalten der mit der Mobilstation verbundenen SIM-Karte führt. Hierbei wird ausgenutzt, dass eine derartige sichere Abschaltroutine üblicherweise standardmäßig ausgeführt wird, wenn eine Mobilstation abgeschaltet wird. Würde die SIM-Karte im laufenden Betrieb von der Mobilstation getrennt, könnte dies zu einer Beschädigung der SIM-Karte führen. Grund hierfür ist insbesondere, dass bei einer derartigen Trennung einer SIM-Karte von der Mobilstation ein Manipulationsversuch festgestellt würde, der dazu führen würde, dass sich die SIM-Karte selbst sperrt oder unbrauchbar macht.

Der Begriff SIM-Karte bezeichnet im Rahmen der vorliegenden Erfindung eine Chipkarte, die ein Teilnehmeridentifikationsmodul enthält und verwendet werden kann, um einen Mobilfunkteilnehmer gegenüber einem Mobilfunknetzwerk zu identifizieren. Hierbei kann es sich um eine SIM-Karte nach dem GSM-Standard handeln (GSM: Global System for Mobile Communications). Gleichfalls umfasst der Begriff jedoch auch entsprechende Chipkarten, die in anderen Mobilfunknetzwerken verwendet werden bzw. nach anderen Standards ausgestaltet sind.

In einer Ausführungsform der Erfindung ist vorgesehen, dass die Mobilstation über eine zur Aufnahme der SIM-Karte geeignete Kartenaufnahme verfügt und der Multiplexer ein Anschlussstück aufweist, das in die Kartenaufnahme einsetzbar ist, wobei die SIM-Karten jeweils über ein erstes Schaltmittel mit dem Anschlussstück verbindbar sind. Vorteilhaft kann in dieser Ausgestaltung eine standardmäßig vorgesehene Kartenaufnahme der Mobilstation zur Aufnahme von SIM-Karten genutzt werden, um die Mobilstation jeweils mit einer der in den Multiplexer eingesetzten SIM-Karten zu verbinden. Eine besondere Schnittstelle der Mobilstation zur Verbindung mit dem Multiplexer ist nicht erforderlich.

Eine verbundene Ausgestaltung der Mobilfunkvorrichtung sieht vor, dass das Anschlussstück die äußeren Abmessungen einer SIM-Karte besitzt und Kontaktflächen aufweist, die wie Kontaktflächen auf einer SIM-Karte angeordnet sind. Vorteilhaft kann ein derartiges Anschlussstück wie eine SIM-Karte in die Kartenaufnahme der Mobilstation eingesetzt werden.

Wie zuvor bereits erwähnt, wird eine SIM-Karte vorzugsweise erst dann von der Mobilstation getrennt, wenn die Mobilstation bereits abgeschaltet worden ist. Daher zeichnet sich eine Ausgestaltung der Mobilfunkvorrichtung dadurch aus, dass diese weiterhin eine Steuereinrichtung umfasst, die dazu ausgestaltet ist, die Verbindung zwischen einer SIM-Karte und der Mobilstation mittels des der SIM-Karte zugeordneten ersten Schaltmittels zu trennen, nachdem die Mobilstation mittels des zweiten Schaltmittels abgeschaltet worden ist.

Eine verbundene Ausführungsform der Mobilfunkvorrichtung zeichnet sich dadurch aus, dass zwischen dem Abschalten der Mobilstation und dem Trennen der Verbindung zwischen der SIM-Karte und der Mobilstation ein vorgegebener Zeitabschnitt besteht. Der Zeitabstand wird vorzugsweise derart gewählt, dass er ausreichend ist, um die Abschaltroutine zum sicheren Abschalten der SIM-Karte durchführen zu können.

Vorzugsweise ist die Steuereinrichtung weiterhin dazu ausgestaltet, die Mobilstation mittels des zweiten Schaltmittels einzuschalten, nachdem eine SIM-Karte mittels des zugeordneten ersten Schaltmittels mit der Mobilstation verbunden worden ist. Somit kann die Mobilstation nach dem Wechsel der SIM-Karte mittels der Steuereinrichtung wieder eingeschaltet und mit der neuen SIM-Karte verwendet werden.

Eine Weiterbildung der Mobilfunkvorrichtung umfasst, dass die Mobilfunkvorrichtung eine erste Schnittstelle zum Empfangen von Steuersignalen zur Beeinflussung der Steuereinrichtung aufweist. Dies ermöglicht es insbesondere, externe Steuerbefehle an die Steuereinrichtung zu übermitteln. Insbesondere kann aufgrund derartiger Steuerbefehle beispielsweise ein Wechsel der SIM-Karte gesteuert bzw. ausgelöst werden.

Darüber hinaus ist eine Ausgestaltung der Mobilfunkvorrichtung dadurch gekennzeichnet, dass diese eine zweite Schnittstelle zur Herstellung einer Datenverbindung zu der Mobilstation umfasst. Hierdurch kann mittels einer externen Einrichtung auf die Mobilstation zugegriffen werden. Die externe Einrichtung kann beispielsweise Funktionen der Mobilstation steuern und über die Mobilstation mit einem Mobilfunknetzwerk verbunden werden.

Die erste und/oder die zweite Schnittstelle der Mobilfunkvorrichtung sind in einer Ausführungsform als USB-Schnittstellen ausgestaltet. Dies ist insbesondere dann zweckmäßig, wenn die Mobilfunkvorrichtung mit einer Computereinrichtung verbunden werden soll. Die Verbindung kann in diesem Fall als eine USB-Verbindung ausgestaltet sein, die einen besonders einfachen Zugriff auf die Mobilfunkvorrichtung ermöglicht (USB: Universal Serial Bus).

Gemäß einem weiteren Aspekt der Erfindung wird ein System zum Überprüfen einer Dienstqualität in wenigstens einem Mobilfunknetzwerk vorgeschlagen. Das System umfasst eine Mobilfunkvorrichtung der zuvor beschriebenen Art und eine mit der Mobilfunkvorrichtung verbundene Computereinrichtung, die dazu ausgestaltet ist, über die Mobilstation auf einen Dienst des Mobilfunknetzwerks zuzugreifen. Die Computereinrichtung enthält dabei vorzugsweise eine oder mehrere Applikationen zur Steuerung und Auswertung der Überprüfung der Dienstqualität in dem Mobilfunknetzwerk.

In einer Ausgestaltung des System wird die Computereinrichtung über die erste Schnittstelle der Mobilfunkvorrichtung mit der Steuereinrichtung der Mobilfunkvorrichtung verbunden und ist dazu ausgestaltet, ein Umschalten von einer SIM-Karte zur anderen SIM-Karte mittels eines Steuerbefehls auszulösen.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

### Kurze Beschreibung der Figuren

Von den Figuren zeigt:
- Fig. 1: eine schematische Blockdarstellung einer erfindungsgemäß ausgestalteten Mobilfunkvorrichtung,
- Fig. 2: eine schematische Darstellung eines Multiplexers der in der Figur 1 veranschaulichten Vorrichtung,
- Fig. 3: ausschnittsweise ein schematische Schaltbild des in der Figur 1 gezeigten Multiplexers,
- Fig. 4a: eine schematische Darstellung einer grafischen Benutzeroberfläche zur Steuerung und/oder Überwachung einer in der Mobilfunkvorrichtung enthaltenen Mobilstation und
- Fig. 4b: eine schematische Darstellung einer grafischen Benutzeroberfläche zur Steuerung und/oder Überwachung des Multiplexers.

### Darstellung von Ausführungsbeispielen der Erfindung

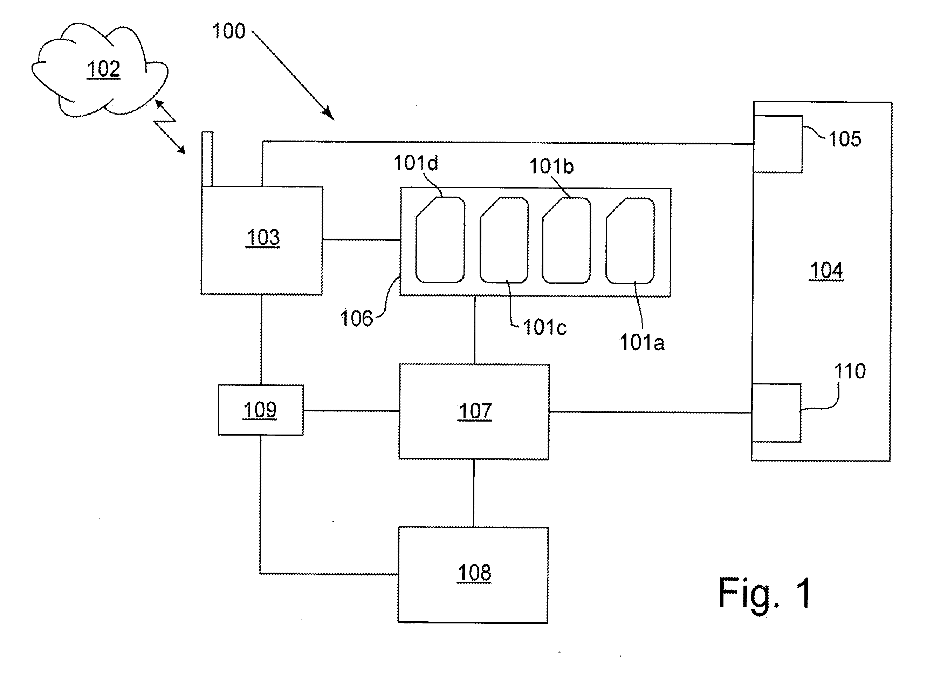

Figur 1 zeigt schematisch ein System 100, das mit einem oder mehreren Mobilfunknetzwerken 102 verbunden werden kann und hierfür über mehrere SIM-Karten 101a,...,d verfügt. Die Mobilfunknetzwerke 102, von denen in Figur 1 eines beispielhaft dargestellt ist, sind in einer an sich bekannten Weise ausgestaltet, beispielsweise nach dem GSM- oder dem UMTS-Standard (UMTS: Universal Mobile Telecommunications System). Das in der Figur gezeigte System 100 kann insbesondere zur Überprüfung der Dienstqualität in den Mobilfunknetzwerken 102 verwendet werden und ermöglicht es, die Überprüfungen unter Verwendung von mehreren SIM-Karten 101a,...,d durchzuführen. Hierdurch sind Vergleiche der Dienstqualität in mehreren Mobilfunknetzwerken 102 möglich, wenn diese als Heimatnetzwerke genutzt werden, und Überprüfungen der Dienstqualität bei Roaming-Verbindungen in einem oder mehreren Mobilfunknetzwerken 102.

Das System 100 umfasst eine Mobilstation 103, mittels derer Funkverbindungen in Mobilfunknetzwerke 102 aufgebaut werden können. Hierzu verfügt die Mobilstation 103 über ein Funkmodul und einen Mikrocontroller zur Steuerung der Funktionen des Funkmoduls. In einer Ausgestaltung, die insbesondere zur Überprüfung der Dienstqualität in Mobilfunknetzwerken 102 zweckmäßig ist, ist die Mobilstation 103 als ein Ergänzungsmodul für eine Computereinrichtung 104 ausgestaltet. In diesem Fall wird mittels der Computereinrichtung 104 auf Funktionen der Mobilstation 103 zugegriffen, und die Mobilstation 103 wird mittels der Computereinrichtung 104 gesteuert. Beispielsweise kann es sich bei der Mobilstation 103 um ein USB-Gerät handeln, welches über eine USB-Schnittstelle 105 mit der Computereinrichtung 104 verbunden ist. Derartige USB-Geräte sind dem Fachmann beispielsweise unter der Bezeichnung USB-Mobilfunkstick bekannt. Gleichfalls kann die Mobilstation 103 jedoch auch in anderer Weise ausgestaltet sein, etwa als eine PCMCIA-Karte, die über einen entsprechenden Anschluss mit der Computereinrichtung 104 verbunden ist (PCMCIA: Personal Computer Memory Card International Association). In weiteren Ausgestaltungen kann die Mobilstation 103 auch als ein im Wesentlichen eigenständiges, integriertes Gerät ausgeführt sein, das über die erforderlichen Komponenten verfügt, um seine Funktionen einem Nutzer direkt bereitzustellen. In diesem Fall verfügt die Mobilstation 103 zusätzlich insbesondere über Ein- und Ausgabemittel zur Interaktion mit dem Nutzer. Eine solche Mobilstation 103 kann beispielsweise als ein Mobiltelefon, ein PDA (Personal Data Assistant) oder als ein ähnliches Gerät ausgestaltet sein.

Zur Spannungsversorgung verfügt das in der Figur 1 gezeigte System über eine Energieversorgungseinheit 108, die beispielsweise als eine Batterie oder als ein mit einem Versorgungsnetzwerk verbindbares Netzteil ausgestaltet sein kann. Die Energieversorgungseinheit 108 kann insbesondere zur Spannungsversorgung der Mobilstation 103 verwendet werden. Hierdurch ist die Spannungsversorgung unabhängig von weiteren Spannungsquellen, wie etwa der Spannungsversorgung über die USB-Schnittstelle 105 der Computereinrichtung 104. Dies hat den Vorteil, dass eine Energieversorgung unabhängig von den Beschränkungen der USB-Schnittstelle 105 ermöglicht wird, die nur eine begrenzte Stromstärke zulässt. Bei portablen Computereinrichtungen 104 ergibt sich der Vorteil, dass die begrenzte Kapazität der Energiequellen des Computers nicht zusätzlich in Anspruch genommen wird, um die Mobilstation 103 zu versorgen. In alternativen Ausführungsformen kann die Mobilstation 103 jedoch auch in anderer Weise mit Energie versorgt werden, beispielsweise über die USB-Schnittstelle 105, über eine andere Schnittstelle der Computereinrichtung 104 oder mittels einer internen Energiequelle.

Um die Mobilstation 103 mit einem Mobilfunknetzwerk 102 verbinden und auf Dienste des Mobilfunknetzwerks 102 zugreifen zu können, wird die Mobilstation 103 mit einer SIM-Karte 101a,...,d verbunden. Hierzu verfügt die Mobilstation 103 über eine als Kartenleseeinrichtung ausgestaltete Kartenaufnahme, in welche eine SIM-Karte 101a,...,d eingesetzt werden kann.

SIM-Karten 101a,...,d sind als Chipkarten ausgeführt, die ein dem Fachmann an sich bekanntes Teilnehmeridentifikationsmodul enthalten. Dieses wird insbesondere zur Identifizierung und Authentifizierung eines Mobilfunknutzers gegenüber dem Mobilfunknetzwerk 102 herangezogen. Falls das Mobilfunknetzwerk 102 nach dem GSM-Standard ausgestaltet ist, handelt es sich bei dem Teilnehmeridentifikationsmodul um ein SIM (Subscriber Identification Modul) nach dem GSM-Standard. Handelt es sich bei dem Mobilfunknetzwerk 102 um ein UMTS-Netzwerk, dann ist das Teilnehmeridentifikationsmodul als ein USIM (Universal Subscriber Identification Modul) ausgeführt. In Mobilfunknetzwerken 102, die nach einem anderen Mobilfunkstandard arbeiten, sind in der Regel entsprechende Teilnehmeridentifikationsmodule vorgesehen.

Die Bezeichnung SIM-Karte wird im Rahmen der vorliegenden Erfindung für Chipkarten verwendet, die ein beliebiges Teilnehmeridentifikationsmodul umfassen, das zur Identifizierung eines Mobilfunknutzers gegenüber einem Mobilfunknetzwerk 102 verwendet werden kann, welches. Neben Chipkarten mit Teilnehmeridentifikationsmodulen nach dem GSM-Standard bezieht sich der Begriff daher auch auf Chipkarten mit anderen Teilnehmeridentifikationsmodulen.

Eine SIM-Karte 101a,...,d wird üblicherweise von dem Betreiber eines Mobilfunknetzwerks 102 ausgegeben, mit dem ein Mobilfunknutzer einen Mobilfunkvertrag abgeschlossen hat. Das Mobilfunknetzwerk 102 dieses Betreibers, dem die SIM-Karte 101a,...,d zugeordnet ist, wird auch als Heimatnetzwerk des Mobilfunknutzers bezeichnet. Innerhalb des Heimatnetzwerks ist der Mobilfunknutzer in einem Register registriert, das üblicherweise als HLR (Home Location Register) bezeichnet wird. Zugriff auf das Heimatnetzwerk wird einem Mobilfunknutzer in der Regel ohne weitere Einschränkungen gewährt, wenn das Mobilfunknetzwerk 102 verfügbar ist. Die von einem Mobilfunknutzer nutzbaren Dienste des Heimatnetzwerks bestimmen sich nach dem Mobilfunkvertrag, den er mit dem Betreiber des Heimatnetzwerks geschlossen hat. Bei einem entsprechenden Vertrag kann dabei ein uneingeschränkter Zugriff auf die in dem Heimatnetzwerk bereitgestellten Dienste zugelassen werden. Meldet sich der Mobilfunknutzer an einem von seinem Heimatnetzwerk verschiedenen, besuchten Mobilfunknetzwerk 102 an, erfolgt die Nutzeridentifizierung und - authentifizierung ebenfalls anhand der SIM-Karte 101a,...,d des Mobilfunknutzers unter Vornahme einer Abfrage des HLR des Heimatnetzwerks. Die Dienste, auf die ein Mobilfunknutzer in einem besuchten Mobilfunknetzwerk 102 zugreifen kann, werden insbesondere durch eine Vereinbarung bestimmt, die zwischen dem Betreiber des besuchten Mobilfunknetzwerks 102 und dem Betreiber des Heimatnetzwerks abgeschlossen worden ist. Besteht keine solche Vereinbarung, wird dem Mobilfunknutzer der Zugriff auf das Mobilfunknetzwerk 102 üblicherweise verweigert.

Um missbräuchliche Zugriffe auf eine SIM-Karte 101a,...,d zu vermeiden, ist eine Sicherheitsarchitektur vorgesehen, die unberechtigte Zugriffe auf Daten und Funktionen des Teilnehmeridentifikationsmoduls verhindert. Die Sicherheitsarchitektur umfasst üblicherweise Mechanismen zur Erkennung von Manipulationsversuchen. Wird ein derartiger Manipulationsversuch erkannt, kann die SIM-Karte 101a,...,d beispielsweise gesperrt oder auch dauerhaft unbrauchbar gemacht werden, um zu verhindern, dass Vorteile aus der Manipulation gezogen werden können. Insbesondere wird üblicherweise dann ein Manipulationsversuch festgestellt, wenn die Verbindung zwischen der SIM-Karte 101a,...,d und der Mobilstation 103 unvorhergesehen getrennt wird. Hierdurch wird verhindert, dass die Ausführung von Befehlsfolgen in der SIM-Karte 101a,...,d und/oder die Übertragung von Befehlsfolgen zu der SIM-Karte 101a,...,d gezielt unterbrochen wird, um daraus in missbräuchlicher Absicht einen Nutzen zu ziehen. Das Abschalten einer SIM-Karte 101a,...,d erfordert daher eine vorgegebene Abschaltprozedur, die insbesondere die Ankündigung eines bevorstehenden Abschaltvorgangs durch die Mobilstation 103 umfasst. Die Abschaltprozedur wird insbesondere bei einer Abschaltung der Mobilstation 103 durchgeführt, die üblicherweise auch zur Abschaltung der mit der Mobilstation 103 verbundenen SIM-Karte 101a,...,d führt.

In dem System 100 wird eine Mehrzahl von SIM-Karten 101a,...,d bereitgestellt, die wahlweise mit der Mobilstation 103 verbunden werden können. Hierdurch kann die Mobilstation 103 mit mehreren Heimatnetzwerken verbunden werden, und/oder Roaming-Verbindungen in einem Mobilfunknetzwerk 102 können unter Verwendung von mehreren SIM-Karten 101a,...,d herstellt werden. Die SIM-Karten 101a,...,d sind in einem Multiplexer 106 enthalten, der in der beispielhaften Darstellung in der Figur 1 vier unterschiedliche SIM-Karten 101a,...,d beinhaltet. Die Erfindung ist jedoch nicht auf einen Multiplexer 106 für vier SIM-Karten 101a,...,d eingeschränkt, sondern der Multiplexer 106 kann sowohl weniger als auch mehr SIM-Karten 101a,...,d enthalten.

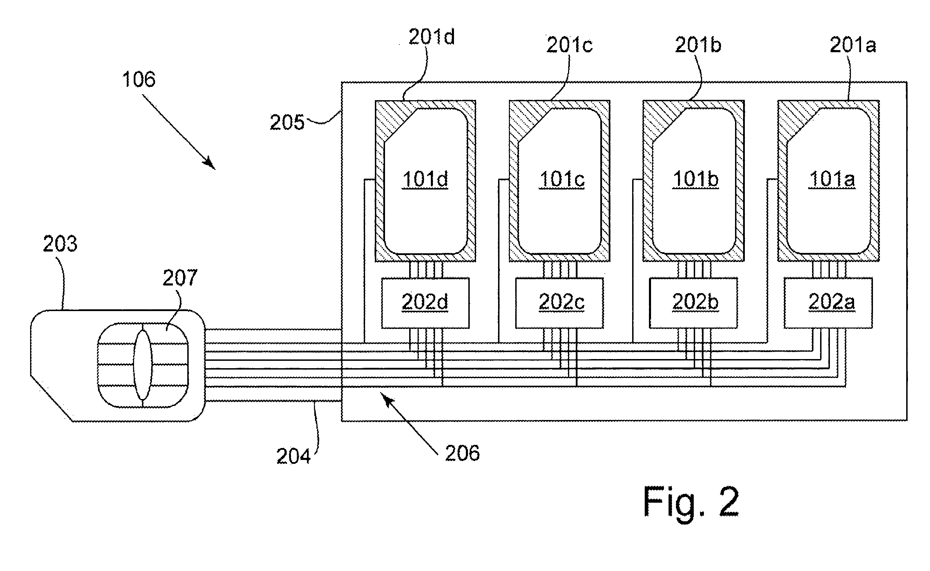

Figur 2 zeigt den Multiplexer 106 aus Figur 1 in größerer Einzelheit. Der Multiplexer 106 verfügt über mehrere Aufnahmevorrichtungen 201a,...,d zur Aufnahme von SIM-Karten 101a,...,d, in welche die SIM-Karten 101a,...,d eingesteckt werden können. Jede SIM-Karte 101a,...,d kann mittels eines zugeordneten Schalters 202a,...,d wahlweise mit einem Kontaktstück 203 verbunden werden, welches die äußeren Abmessungen und dieselben Kontaktflächen 207 (nur exemplarisch beziffert) wie eine SIM-Karte 101a,...,d aufweist. Das Kontaktstück 203 wird in die Kartenleseeinrichtung der Mobilstation 103 eingesetzt, so dass die Mobilstation 103 Zugriff auf jeweils eine der in den Multiplexer 106 eingesetzten SIM-Karten 101a,...,d hat. Über das Kontaktstück 203 werden dabei die Kontakte der ausgewählten SIM-Karte 101a,...,d mit den entsprechenden Kontakten der Kartenleseeinrichtung der Mobilstation 103 verbunden. Die Ansteuerung der Schalter 202a,...,d wird von einem Controller 107 vorgenommen, der beispielsweise einen Mikroprozessor umfasst. Der Controller 107 ist vorzugsweise zusammen mit dem Multiplexer 106 in einem Gehäuse integriert.

Das Kontaktstück 203 ist über eine flexible Leiterplatte 204 mit einer Leiterplatte 205 verbunden, auf welcher die SIM-Karten 101a,...,d angeordnet sind. Mittels eines Leiterbündels 206, das auch in der flexiblen Leiterplatte 204 geführt ist und dessen Leiter jeweils einem der relevanten Kontakte der SIM-Karten 101a,...,d zugeordnet sind, sind die Kontaktflächen 207 des Kontaktstücks 203 mit jeweils einer SIM-Karten 101a,...,d verbunden.

Eine SIM-Karte 101a,...,d verfügt beispielsweise über acht Kontakte, die üblicherweise als C1 bis C8 bezeichnet werden. Die Kontakte C4 und C8 sind Hilfskontakte, die im Mobilfunk nicht verwendet werden. Über den Kontakt C1 mit der Bezeichnung VCC wird eine SIM-Karte 101a,...,d mit Spannung versorgt. Der Kontakt C2 mit der Bezeichnung RST dient als Eingang für ein Resetsignal, der Kontakt C3 mit der Bezeichnung CLK dient als Eingang für ein Taktsignal, der Kontakt C5 mit der Bezeichnung GND ist der Massekontakt, der Kontakt C6 mit der Bezeichnung VPP kann zur Bereitstellung einer Programmierspannung verwendet werden und der Kontakt C7 mit der Bezeichnung I/O dient als Eingang und Ausgang für die serielle Kommunikation zwischen der Mobilstation 103 und der SIM-Karte 101a,...,d. Über die Leiterbahnen des Leiterbündels 206 können diese Kontakte einer in den Multiplexer 106 eingesetzten SIM-Karte 101a,...,d mit den Kontakten 207 des Kontaktstücks 203 verbunden werden. Die Kontakte der SIM-Karte 101a,...,d werden dabei jeweils mit den Kontakten 207 des Kontaktstücks 203 verbunden, deren Positionen den Positionen der Kontakte auf der SIM-Karte 101a,...,d entspricht.

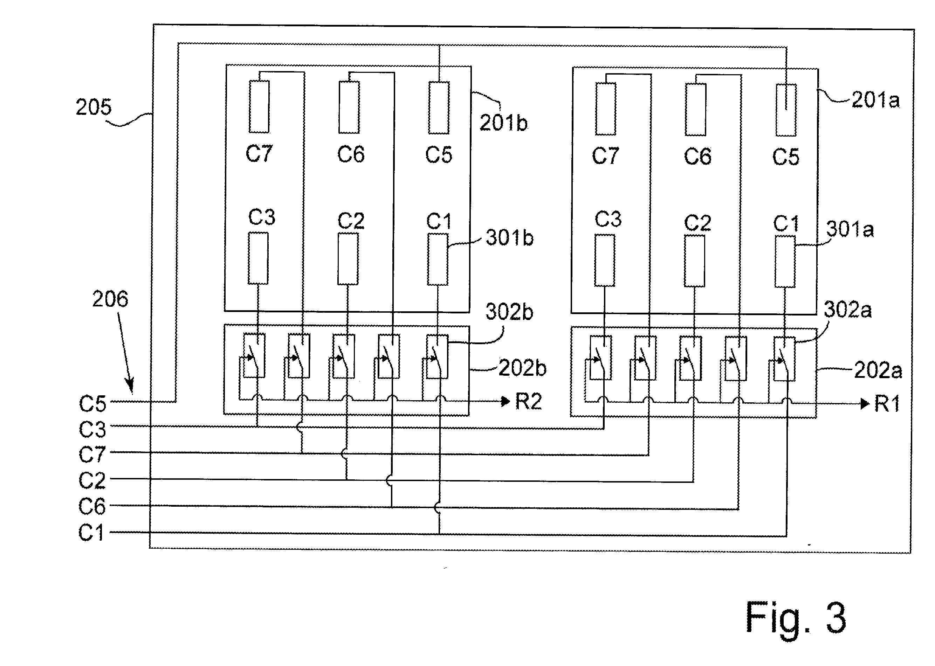

Ein schematisches Schaltbild eines Ausschnitts der Leiterplatte 205 des Multiplexers 106 ist in der Figur 3 dargestellt. Der Ausschnitt umfasst beispielhaft zwei Aufnahmevorrichtungen 201 a,b für die SIM-Karten 101a,b. Die übrigen Aufnahmevorrichtungen 201c,d sind in derselben Weise verschaltet. Jede Aufnahmevorrichtung 201 a,b verfügt über Kontaktflächen 301 a,b (jeweils nur beispielhaft beziffert) zur Kontaktierung der relevanten Kontakte C1, C2, C3, C5, C6 und C7 der eingesetzten SIM-Karte 101a,b. Mit Ausnahme der dem Massekontakt C5 entsprechenden Kontaktfläche 301 a,b können die Kontaktflächen 301 a,b einer Aufnahmevorrichtung 201 a,b über den zugeordneten Schalter 202a,b mit den Leitern des Leiterbündels 206 verbunden, so dass die Kontaktflächen einer SIM-Karte 101 a,b mit den entsprechenden Kontaktflächen des Kontaktstücks 203 verbunden werden. Die Schalter 202a,b verfügen jeweils über Schaltmittel 302a,b (jeweils nur exemplarisch beziffert), die im geschlossenen Zustand die Kontaktflächen 301 a,b der Aufnahmevorrichtungen 201 a,b mit den Leitern des Leiterbündels 206 verbinden. Im geöffneten Zustand der Schaltmittel 302a,b sind die Verbindungen unterbrochen. Die Schaltmittel 302a,b sind beispielsweise als Relais, insbesondere als Halbleiterrelais ausgestaltet. Die Steuerung der Schalter 202a,b bzw. der in den Schaltern 202a,b enthaltenen Schaltmittel 302a,b erfolgt über Steuerleitungen, die über Steueranschlüsse R1, R2 mit dem Controller 107 verbunden sind. Die Massekontakte C5 der SIM-Karten 101a,b sind direkt, das heißt nicht über einen Schalter 202a,b, mit der zugehörigen Kontaktfläche 207 des Kontaktstücks 203 verbunden, da ein Schalten der Masseverbindung nicht erforderlich ist.

Der Controller 107 kann auf der Leiterplatte 205 des Multiplexers 106 angeordnet sein. Gleichfalls ist eine separate Anordnung möglich, jedoch vorzugsweise in demselben Gehäuse. Neben einer Ansteuerung der Schalter 202 kann der Controller 107 die Mobilstation 103 einschalten und ausschalten. In einer beispielhaften Ausgestaltung steuert der Controller 107 zu diesem Zweck eine Spannungsversorgung der Mobilstation 103. Um die Mobilstation 103 einzuschalten, wird die Mobilstation 103 mit der sie versorgenden Spannungsversorgung verbunden. Um die Mobilstation 103 auszuschalten, wird die Mobilstation 103 von der sie versorgenden Spannungsversorgung getrennt. Bei dem beispielhaft in der Figur 1 gezeigten System 100, in dem die Mobilstation 103 von der Energieversorgungseinheit 108 versorgt wird, ist hierfür eine Schalteinrichtung 109 vorgesehen, über welche die Mobilstation 103 mit der Energieversorgungseinheit 108 verbunden ist und die von dem Controller 107 angesteuert wird. In alternativen Ausgestaltungen kann die Mobilstation 103 auch in anderer Weise abgeschaltet werden. Insbesondere kann durch Ansteuerung mittels des Controllers 107 beispielsweise eine Abschaltprozedur der Mobilstation 103 initiiert werden. Hierbei kann es sich etwa um die Abschaltprozedur handeln, die auch dann ausgeführt wird, wenn manuell ein Schalter der Mobilstation 103 betätigt wird, um diese abzuschalten.

In dem in der Figur 1 gezeigten System 100 ist der Controller 107 mit der Computereinrichtung 104 verbunden. Wie die Verbindung zu der Mobilstation 103 kann die Verbindung zu dem Controller 107 beispielsweise ebenfalls über eine USB-Schnittstelle 110 der Computereinrichtung 104 hergestellt werden. Durch eine Ansteuerung des Controllers 107 mittels der Computereinrichtung 104, kann in der gezeigten Ausgestaltung der Wechsel von einer SIM-Karte 101a,...,d zu einer anderen SIM-Karte 101a,...,d vorgenommen werden. In weiteren Ausgestaltungen kann auch eine andere Steuerkonsole zur Ansteuerung des Controllers 107 vorgesehen sein. Beispielsweise kann es sich bei der Steuerkonsole um eine Eingabe- und Anzeigeeinrichtung handeln, die an dem Gehäuse angeordnet ist, in dem der Multiplexer 106 und der Controller 107 angeordnet sind. Alternativ kann der Controller 107 auch über eine geeignete Schnittstelle mit der Mobilstation 103 verbunden und von dieser aus angesteuert werden. Letzteres kann insbesondere dann vorgesehen sein, wenn die Mobilstation 103 über Eingabe- und Anzeigeeinrichtungen verfügt, wie es etwa bei einem Mobiltelefon oder einem PDA der Fall ist.

Um die von der Mobilstation 103 verwendete SIM-Karte 101a,...,d zu wechseln, wird zunächst die Mobilstation 103 abgeschaltet. Hierzu trennt der Controller 107 die Mobilstation 103 von der Energieversorgungseinheit 108, indem die Schalteinrichtung 109 geöffnet wird. Das Abschalten der Mobilstation 103 führt dazu, dass ein Abschaltvorgang zur sicheren Abschaltung der zuvor verwendeten SIM-Karte 101a,...,d durchgeführt wird. Die Energieversorgung zur Durchführung des Abschaltvorgangs erfolgt beispielsweise über in der Mobilstation enthaltene Kapazitäten. Dann wird die zuvor verwendete SIM-Karte 101a,...,d mittels des zugehörigen Schalters 202a,...,d von der Mobilstation 103 getrennt. Eine ausgewählte weitere SIM-Karte 101a,...,d wird durch eine Betätigung des zugehörigen Schalters 202a,...,d mit der Mobilstation 103 verbunden. Vorzugsweise ist eine Zeitdauer zwischen dem Abschalten der Mobilstation 103 und der Trennung zwischen einer SIM-Karte 101a,...,d und der Mobilstation 103 vorgesehen, die ausreichend lang ist, um den Abschaltvorgang zum sicheren Ausschalten der SIM-Karte 101a,...,d durchführen zu können. Nachdem die neue SIM-Karte 101a,...,d mit der Mobilstation 103 verbunden worden ist, wird die Mobilstation 103 mittels der Schalteinrichtung 109 erneut eingeschaltet. Nach dem Einschalten kann sich die Mobilstation 103 unter Verwendung der neuen SIM-Karte 101a,...,d an einem Mobilfunknetzwerk 102 anmelden. Die Ansteuerung der Schalter 202a,...d zum Trennen und Herstellen von Verbindungen zwischen der Mobilstation 103 und den SIM-Karten 101a,...,d wird, wie zuvor bereits beschrieben, von dem Controller 107 vorgenommen.

Eine Routine zur Durchführung des zuvor beschriebenen Wechsels einer SIM-Karte 101a,...,d, welche insbesondere die zuvor beschriebene Abfolge von Schaltvorgängen sowie die Zeit zwischen dem Abschalten der Mobilstation 103 und dem Umschalten der SIM-Karte 101a,...,d festlegt, ist in einer Ausführungsform innerhalb des Controllers 107 implementiert. In diesem Fall, werden von der Computereinrichtung 104 oder einer anderen Steuerkonsole lediglich Steuersignale an den Controller 107 gesendet, welche den SIM-Karten-Wechsel initiieren und die zu verwendende SIM-Karte 101a,...,d spezifizieren, d.h. die SIM-Karte 101a,...,d, auf die umgeschaltet werden soll. Alternativ kann die Routine jedoch auch in der Computereinrichtung 104 oder einer alternativen Steuerkonsole implementiert sein. Ist dies der Fall, werden die Schalter 202a,...,d und die Schalteineinrichtung 109 über den Controller 107 von der Computereinrichtung 104 oder der alternativen Steuerkonsole gesteuert.

Wie bereits beschrieben, eignet sich das in der Figur 1 gezeigte System 100 insbesondere zur Durchführung von Tests der Dienstqualität in einem oder mehreren Mobilfunknetzwerken 102. Aufgrund seiner einfachen und kompakten Bauweise kann es dabei auch für eine mobile Testdurchführung eingesetzt werden. Qualitätstester bewegen sich hierbei räumlich und überprüfen beispielsweise die Dienstqualität, die von unterschiedlichen Mobilfunknetzwerken 102 an unterschiedlichen Orten zur Verfügung gestellt wird. Die Computereinrichtung 104 ist hierzu vorzugsweise als ein Notebookcomputer ausgestaltet.

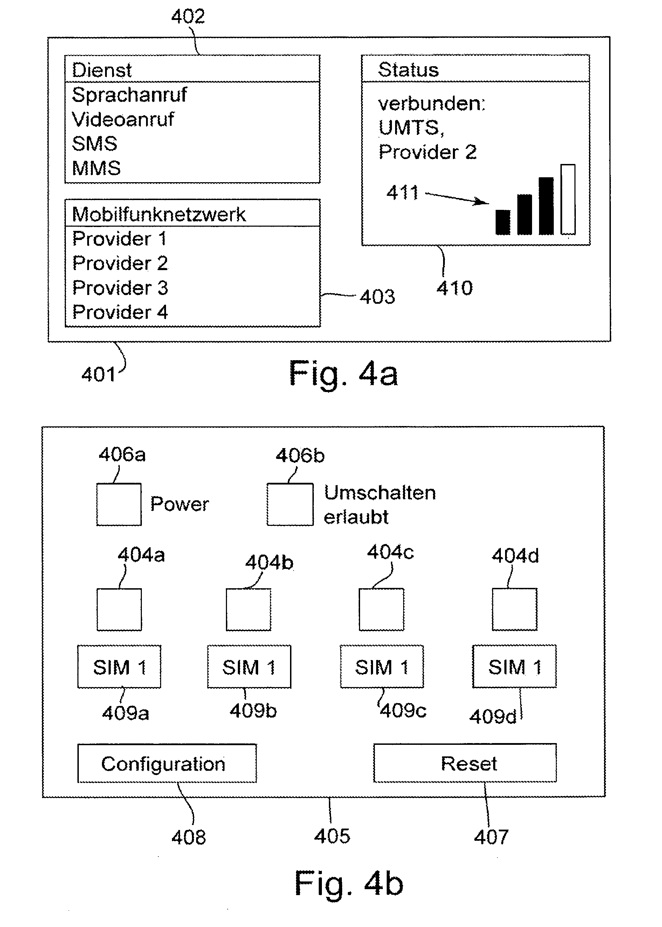

Zur Durchführung der Tests der Dienstqualität ist auf der Computereinrichtung 104 vorzugsweise eine entsprechende Software installiert, mit deren Hilfe die Tests gesteuert, überwacht und/oder ausgewertet werden können. Figur 4a zeigt beispielhaft einen Teil einer grafischen Benutzeroberfläche der Software, die dazu dient, eine Testsequenz für die Qualitätsprüfung von Mobilfunkverbindungen auszuführen und zu überwachen. Die grafische Benutzeroberfläche umfasst ein Fenster 401, in welchem Programmfunktionen zur Steuerung der Mobilstation 103 auswählbar sind. Insbesondere kann von dem Benutzer über Schaltflächen in einem Bereich 402 eingestellt werden, welcher Kommunikationsdienst zum Einsatz kommen soll, z.B. ein Sprachanruf, ein Videoanruf, SMS (Short Message Service) oder MMS (Multimedia Messaging Service). In einem zweiten Bereich 403 werden dem Benutzer unterschiedliche, von verschiedenen Betreibern (Providern) betriebene Mobilfunknetzwerke 102 angeboten, die mittels Schaltflächen ausgewählt werden können. Weiterhin wird dem Nutzer in dem dargestellten Ausführungsbeispiel in einem Bereich 410 der Status der Mobilstation 103 angezeigt. Die in Figur 4a beispielhaft gewählte Darstellung zeigt beispielsweise an, dass eine UMTS-Verbindung über das Mobilfunknetzwerk 102 des Betreibers Provider 2 besteht. Die Empfangsstärke wird anhand einer Grafik 411 angezeigt. Die Steuerung der Mobilstation 103 zur Durchführung von Testprogrammen kann über die grafische Benutzerschnittstelle manuell durchgeführt werden. Gleichfalls können jedoch auch zuvor definierte Testprogramme automatisiert ausgeführt werden.

Figur 4b zeigt eine grafische Benutzeroberfläche einer Steuerapplikation zur Steuerung des Multiplexers 106. In einem Fenster 405 wird der Schaltzustand der Schalter 202a,...,d anhand von Kontrollfeldern 404a,...d, dargestellt, die jeweils einem Schalter 202a,...,d zugeordnet sind. Hieraus ergibt sich, welche in den Multiplexer 106 eingesetzte SIM-Karte 101a,...,d aktuell mit der Mobilstation 103 verbunden ist. Anhand der Kontrollfelder 406a, b wird der Schaltzustand der Schalteinheit 109 dargestellt, aus dem sich ergibt, ob die Mobilstation 103 eingeschaltet oder ausgeschaltet ist (Kontrollfeld 406a) und ob ein Wechsel der SIM-Karte 101a,...,d aktuell möglich ist (Kontrollfeld 406b). Jeder SIM-Karte 101a,...,d bzw. jedem Schalter 202a,...,d ist innerhalb der grafischen Benutzeroberfläche zudem eine Schaltfläche 409a,...d zugeordnet. Das Anklicken der Schaltfläche 409a,...,d für die Wahl einer bestimmten SIM-Karte 101a,...,d führt zum Umschalten auf die ausgewählte SIM-Karte 101a,...,d. Der Wechsel von SIM-Karten 101a,...,d kann jedoch auch automatisch von der Steuerapplikation gesteuert werden, beispielsweise um zuvor definierte Testprogramme durchzuführen. Die Anzeige im Fenster 405 dient dabei in erster Linie der Information des Benutzers über die Schaltzustände und gestattet dem Benutzer jedoch auch manuelle Eingriffe, falls dies erforderlich sein sollte. Zum Beispiel kann er auf einer Schaltfläche 407 auch alle Relais für Testzwecke abschalten. Es ist auch möglich, mit der Schaltfläche 408 eine Funktion auszuwählen, mit der die Konfiguration der Schaltverbindungen veränderbar ist.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten beziehungsweise Einrichtungen ausführen.

In den Patentansprüchen angegebene Bezugszeichen sind nicht als Beschränkungen der eingesetzten Mittel und Schritte anzusehen.

## Patentansprüche

1. Mobilfunkvorrichtung, umfassend eine Mobilstation (103), die unter Verwendung einer SIM-Karte (101a; 101b; 101c; 101d) mit einem Mobilfunknetzwerk (102) verbindbar ist, und einen mit der Mobilstation (103) verbindbaren Multiplexer (106) zur Aufnahme mehrerer SIM-Karten (101a; 101b; 101c; 101d), wobei der Multiplexer (106) über erste Schaltmittel (202a; 202b; 202c, 202d) verfügt, über die jeweils eine SIM-Karte (101 a; 101 b; 101 c; 101d) mit der Mobilstation (103) verbindbar ist,
**dadurch gekennzeichnet, dass**
der Multiplexer ein mit einer Steuereinrichtung (107) verbundenes zweites Schaltmittel (109) umfasst, das dazu ausgestaltet ist, die Mobilstation (103) mittels einer Abschaltprozedur initiiert durch die Steuereinrichtung (107) abzuschalten, bevor eine der SIM-Karten (101 a; 101 b; 101 c; 101 d) von der Mobilstation (103) getrennt und eine andere der SIM-Karten (101a; 101b; 101c; 101d) mit der Mobilstation (103) verbunden wird.

2. Mobilfunkvorrichtung nach Anspruch 1, wobei die Mobilstation (103) und/oder die SIM-Karten (101 a; 101 b; 101 c; 101 d) derart ausgestaltet sind, dass aufgrund des Abschaltens der Mobilstation (103) eine Abschaltroutine durchgeführt wird, die zum sicheren Abschalten der mit der Mobilstation (103) verbundenen SIM-Karte (101a; 101b; 101c; 101 d) führt.

3. Mobilfunkvorrichtung nach Anspruch 1 oder 2, wobei die Mobilstation (103) über eine zur Aufnahme einer SIM-Karte (101a; 101b; 101c; 101d) geeignete Kartenaufnahme verfügt und der Multiplexer (106) ein Anschlussstück (203) aufweist, das in die Kartenaufnahme einsetzbar ist, wobei die SIM-Karten (101 a; 101 b; 101 c; 101 d) jeweils über das erste Schaltmittel (202a; 202b; 202c, 202d) mit dem Anschlussstück (203) verbindbar sind.

4. Mobilfunkvorrichtung nach Anspruch 3, wobei das Anschlussstück (203) die äußeren Abmessungen einer SIM-Karte (101 a; 101 b; 101 c; 101 d) besitzt und Kontaktflächen (207) aufweist, die wie Kontaktflächen auf einer SIM-Karte (101a; 101b; 101c; 101d) angeordnet sind.

5. Mobilfunkvorrichtung nach einem der vorangegangenen Ansprüche, **dadurch gekennzeichnet, dass** die Steuereinrichtung (107) dazu ausgestaltet ist, die Verbindung zwischen einer SIM-Karte (101 a; 101 b; 101 c; 101 d) und der Mobilstation (103) mittels des der SIM-Karte (101a; 101b; 101c; 101d) zugeordneten ersten Schaltmittels (202a; 202b; 202c, 202d) zu trennen, nachdem die Mobilstation (103) mittels des zweiten Schaltmittels (109) abgeschaltet worden ist.

6. Mobilfunkvorrichtung nach Anspruch 5, wobei zwischen dem Abschalten der Mobilstation (103) und dem Trennen der Verbindung zwischen der SIM-Karte (101 a; 101 b; 101 c; 101 d) und der Mobilstation (103) ein vorgegebener Zeitabstand besteht.

7. Mobilfunkvorrichtung nach einem der vorangegangenen Ansprüche, wobei die Steuereinrichtung (107) dazu ausgestaltet ist, die Mobilstation (103) mittels des zweiten Schaltmittels (109) einzuschalten, nachdem eine SIM-Karte (101a; 101b; 101c; 101d) mittels des zugeordneten ersten Schaltmittels (202a; 202b; 202c, 202d) mit der Mobilstation (103) verbunden worden ist.

8. Mobilfunkvorrichtung nach einem der vorangegangenen Ansprüche, umfassend eine erste Schnittstelle zum Empfangen von Steuersignalen zur Beeinflussung der Steuereinrichtung (107).

9. Mobilfunkvorrichtung nach einem der vorangegangenen Ansprüche, umfassend eine zweite Schnittstelle zur Herstellung einer Datenverbindung zu der Mobilstation (103).

10. Mobilfunkvorrichtung nach Anspruch 8 oder 9, wobei die erste und/oder die zweite Schnittstelle eine USB-Schnittstelle ist.

11. System zum Überprüfen einer Dienstqualität in wenigstens einem Mobilfunknetzwerk (102), umfassend eine Mobilfunkvorrichtung nach einem der vorangegangenen Ansprüche und eine mit der Mobilfunkvorrichtung verbundene Computereinrichtung (104), die dazu ausgestaltet ist, über die Mobilstation (103) auf einen Dienst des Mobilfunknetzwerks (102) zuzugreifen.

12. System nach Anspruch 11, wobei die Computereinrichtung (104) über die erste Schnittstelle der Mobilfunkvorrichtung mit der Steuereinrichtung (107) der Mobilfunkvorrichtung verbunden ist und dazu ausgestaltet ist, ein Umschalten von einer SIM-Karte (101a; 101 b; 101 c; 101 d) zu einer anderen SIM-Karte (101a; 101 b; 101 c; 101 d) anhand eines Steuerbefehls auszulösen.

## Claims

1. A mobile telephony device, comprising a mobile station (103) that can be connected to a mobile telephony network (102) by using a SIM card (101a; 101b; 101c; 101d), and comprising a multiplexer (106) that can be connected to the mobile station (103) and that holds several SIM cards (101a; 101b; 101c; 101d), whereby the multiplexer (106) has a first switching means (202a; 202b; 202c; 202d) by means of which each one of the SIM cards (101a; 101b; 101c; 101d) can be connected to the mobile station (103),
**characterized in that**
the multiplexer has a second switching means (109) that is connected to a control unit (107) and that is configured to switch off the mobile station (103) by means of a switch-off procedure initiated by the control unit (107) before one of the SIM cards (101a; 101b; 101c; 101d) is disconnected from the mobile station (103) and another SIM card (101a; 101b; 101c; 101d) is connected to the mobile station (103).

2. The mobile telephony device according to Claim 1, whereby the mobile station (103) and/or the SIM cards (101a; 101b; 101c; 101d) are configured in such a way that, owing to the switching off of the mobile station (103), a switch-off routine is executed that ensures that the SIM card (101a; 101b; 101c; 101d) connected to the mobile station (103) is securely switched off.

3. The mobile telephony device according to Claim 1 or 2, whereby the mobile station (103) has a card holder suitable to hold a SIM card (101a; 101b; 101c; 101d), and the multiplexer (106) has a connection piece (203) that can be inserted into the card holder, whereby the SIM cards (101a; 101b; 101c; 101d) can each be connected to the connection piece (203) via the first switching means (202a; 202b; 202c; 202d).

4. The mobile telephony device according to Claim 3, whereby the connection piece (203) has the external dimensions of a SIM card (101a; 101b; 101c; 101d), and it has contact surfaces (207) that are arranged like contact surfaces on a SIM card (101a; 101b; 101c; 101d).

5. The mobile telephony device according to one of the preceding claims, **characterized in that** the control unit (107) is configured to disconnect the connection between a SIM card (101a; 101b; 101c; 101d) and the mobile station (103) through the first switching means (202a; 202b; 202c; 202d) that is associated with the SIM card (101a; 101b; 101c; 101d) after the mobile station (103) has been switched off through the second switching means (109).

6. The mobile telephony device according to Claim 5, whereby a predefinable time interval passes between the point in time when the mobile station (103) is switched off and the point in time when the connection between the SIM card (101a; 101b; 101c; 101d) and the mobile station (103) is disconnected.

7. The mobile telephony device according to one of the preceding claims, whereby the control unit (107) is configured to switch on the mobile station (103) through the second switching means (109) after a SIM card (101a; 101b; 101c; 101d) has been connected to the mobile station (103) through the associated first switching means (202a; 202b; 202c; 202d).

8. The mobile telephony device according to one of the preceding claims, comprising a first interface for receiving control signals for influencing the control unit (107).

9. The mobile telephony device according to one of the preceding claims, comprising a second interface for establishing a data connection to the mobile station (103).

10. The mobile telephony device according to Claim 8 or 9, whereby the first and/or the second interface is a USB interface.

11. A system for checking the service quality in at least one mobile telephony network (102), comprising a mobile telephony device according to one of the preceding claims and comprising a computer device (104) that is connected to the mobile telephony device and that is configured to access a service of the mobile telephony network (102) via the mobile station (103).

12. The system according to Claim 11, whereby the computer device (104) is connected via the first interface of the mobile telephony device to the control unit (107) of the mobile telephony device and it is configured to trigger a switchover from one SIM card (101a; 101b; 101c; 101d) to another SIM card (101a; 101b; 101c; 101d) on the basis of a control command.

## Revendications

1. Dispositif radio mobile comprenant une station mobile (103) qui peut être connectée à un réseau radio mobile (102) moyennant l'utilisation d'une carte SIM (101a ; 101b ; 101c ; 101d) et un multiplexeur (106) qui peut être connecté à la station mobile (103) et est destiné à recevoir plusieurs cartes SIM (101a ; 101b ; 101c ; 101d), le multiplexeur (106) disposant de premiers moyens de commutation (202a ; 202b ; 202c ; 202d) via lesquels respectivement une carte SIM (101a ; 101b ; 101 c ; 101 d) peut être connectée à la station mobile (103), **caractérisé en ce que** le multiplexeur comprend un deuxième moyen de commutation (109) relié à un dispositif de commande (107) et conçu pour couper la station mobile (103) au moyen d'une procédure de coupure initialisée par le dispositif de commande (107) avant que l'une des cartes SIM (101 a ; 101 b ; 101 c ; 101 d) ne soit déconnectée de la station mobile (103) et qu'une autre des cartes SIM (101 a ; 101 b ; 101 c ; 101 d) ne soit connectée à la station mobile (103).

2. Dispositif radio mobile selon la revendication 1, la station mobile (103) et/ou les cartes SIM (101a ; 101b ; 101c ; 101d) étant conçues de telle sorte qu'est exécutée, en raison de la coupure de la station mobile (103), une routine de coupure qui entraîne la coupure sécurisée de la carte SIM (101a ; 101b ; 101c ; 101 d) connectée à la station mobile (103).

3. Dispositif radio mobile selon la revendication 1 ou 2, la station mobile (103) disposant d'un logement de carte approprié pour recevoir une carte SIM (101a ; 101b ; 101c ; 101d) et le multiplexeur (106) présentant une pièce de raccordement (203) qui peut être insérée dans le logement de carte, les cartes SIM (101a ; 101b ; 101c ; 101d) pouvant être reliées chacune à la pièce de raccordement (203) par l'intermédiaire du premier moyen de commutation (202a ; 202b ; 202c ; 202d).

4. Dispositif radio mobile selon la revendication 3, la pièce de raccordement (203) ayant les dimensions extérieures d'une carte SIM (101a ; 101b ; 101c ; 101d) et présentant des surfaces de contact (207) qui sont agencées comme des surfaces de contact sur une carte SIM (101a ; 101b ; 101 c ; 101 d).

5. Dispositif radio mobile selon l'une des revendications précédentes, **caractérisé en ce que** le dispositif de commande (107) est conçu pour couper la connexion entre une carte SIM (101a ; 101b ; 101c ; 101d) et la station mobile (103) au moyen du premier moyen de commutation (202a ; 202b ; 202c ; 202d) associé à la carte SIM (101a ; 101b ; 101c ; 101d) après que la station mobile (103) a été coupée au moyen du deuxième moyen de commutation (109).

6. Dispositif radio mobile selon la revendication 5, un intervalle de temps prédéfini existant entre la coupure de la station mobile (103) et la coupure de la connexion entre la carte SIM (101a ; 101b ; 101c ; 101d) et la station mobile (103).

7. Dispositif radio mobile selon l'une des revendications précédentes, le dispositif de commande (107) étant conçu pour mettre en marche la station mobile (103) au moyen du deuxième moyen de commutation (109) après qu'une carte SIM (101a ; 101 b ; 101 c ; 101 d) a été connectée à la station mobile (103) au moyen du premier moyen de commutation associé (202a ; 202b ; 202c ; 202d).

8. Dispositif radio mobile selon l'une des revendications précédentes, comprenant une première interface pour la réception de signaux de commande pour influencer le dispositif de commande (107).

9. Dispositif radio mobile selon l'une des revendications précédentes, comprenant une deuxième interface pour établir une liaison de données vers la station mobile (103).

10. Dispositif radio mobile selon la revendication 8 ou 9, la première et/ou la deuxième interface étant une interface USB.

11. Système de contrôle d'une qualité de service dans au moins un réseau radio mobile (102), comprenant un dispositif radio mobile selon l'une des revendications précédentes et un dispositif informatique (104) connecté au dispositif radio mobile et conçu pour accéder, via la station mobile (103), à un service du réseau radio mobile (102).

12. Système selon la revendication 11, le dispositif informatique (104) étant relié au dispositif de commande (107) du dispositif radio mobile via la première interface du dispositif radio mobile et étant conçu pour déclencher une commutation d'une carte SIM (101 a ; 101 b ; 101 c ; 101 d) vers une autre carte SIM (101 a ; 101b ; 101c ; 101d) à l'aide d'un ordre de commande.
